# EUROPÄISCHE PATENTSCHRIFT

(11) **EP 0 817 597 B1**
(45) Veröffentlichungstag und Bekanntmachung des Hinweises auf die Patenterteilung: **08.09.1999**
(21) Anmeldenummer: 96910940.4
(22) Anmeldetag: 28.03.1996
(51) Int. Cl.: A61C 13/00

(54) **VERFAHREN ZUR HERSTELLUNG VON ZAHNPROTHETISCHEN REKONSTRUKTIONEN**
PROCESS FOR MANUFACTURING PROSTHETIC DENTAL RECONSTRUCTIONS
PROCEDE DE PRODUCTION D'ELEMENTS DE RECONSTITUTION AU MOYEN DE PROTHESES DENTAIRES

(30) Priorität: 28.03.1995 DE 19511396
(43) Veröffentlichungstag der Anmeldung: 14.01.1998
(73) Patentinhaber: WOHLWEND, Arnold, 8903 Birmensdorf (CH)
(72) Erfinder: WOHLWEND, Arnold, 8903 Birmensdorf (CH)
(74) Vertreter: Kaminski, Susanne, Dr.
(86) Internationale Anmeldenummer: EP9601367
(87) Internationale Veröffentlichungsnummer: WO9629951

(56) Entgegenhaltungen:
- EP-A- 0 389 461
- EP-A- 0 477 157
- EP-A- 0 580 565

## Beschreibung

Die Erfindung betrifft ein verfahren nach dem Oberbegriff des Anspruchs 1.

Unter zahnprothetischen Rekonstruktionen sollen prothetische Zahninlays, prothetische Zahnkronen und Zahnbrücken, Konstruktionselemente aller Art, wie Abutments (Distanzhülsen) und zahntechnische Hilfsmittel aller Art verstanden werden, wobei es sich insbesondere um die gegebenenfalls noch zu verblendenden Gerüststrukturen handelt.

Es sind eine Anzahl von Methoden bekannt, die die Herstellung von prothetischen Zahninlays bzw. von prothetischen Zahnkronen betreffen. Nach dem Abschleifen des Zahndefektes wird grundsätzlich ein Abdruck des Zahns, der Zahnumgebung und des Kiefers gemacht, wobei alternativ die Oberfläche der Kavität auch über stereophotogrammetrische Abtasteinrichtungen oder Laserscanning computerunterstützt aufgenommen werden können. Die gewünschte Inlay- oder Kronenaußenform wird entweder unter Verwendung der vor Abschleifen des Zahndefektes aufgenommenen und gespeicherten Daten des Zahnes computerunterstützt mittels einer Drei-Achsenschleifmaschine rekonstruiert und dann direkt aus einem entsprechendem Materialblock, beispielsweise einem Keramikblock, geschnitten, oder aufgrund von über einen Abdruck des noch unbehandelten Zahnes erhaltenen Modellen aus Kunststoff oder Gips erhalten.

Bei der konventionellen Technik, ein Inlay bzw. eine Krone aus Edelmetall bzw. aus einer Ni-Cr Legierung zu fertigen, sind in ästhetischer Hinsicht Abstriche zu machen, dem zwar durch Überbrennen der Metallkappe mit einer Keramikschicht begegnet werden kann. Dieser Vorgang ist allerdings rein fertigungstechnisch diffizil und Ausschuß-anfällig. Dazu kommt, daß in jedem Fall eine Überwachung der Zahnsituation auf röntgenographischem Wege verunmöglicht wird, was insbesondere bei Überkronungen als nachteilig anzusehen ist.

Gerade die wachsende Nachfrage nach ästhetisch restorativer Zahnprothetik hat der Verwendung von anderen Materialien und Methoden Vorschub geleistet, wie beispielsweise hochfestem Glas, das in flüssiger Form in ein feuerfestes Modell gegossen und dann gebrannt wird, oder dem Aufbrennen von Keramikpulver auf einem feuerfesten Modell. Damit werden Inlays bzw. Kronen erhalten, die ästhetisch ansprechbar sind und sich gleichzeitig auch durch eine gute Röntgenopazität auszeichnen.

Keramikprothesen, die aus einem Keramikrohling herausgefräst werden, können allerdings - insbesondere in den auslaufenden Randbereichen, die, um einen fugenfreien Übergang zum bestehenden Zahn zu ergeben, äußerst dünn ausgebildet sein müssen - behandlungsbedingt zum Ausbrechen neigen. Auch können Schleifspuren - die selbst bei feiner Finierung möglich sind - zur Rißbildung und damit zu weiterer Bruchgefährdung führen.

In der US 5,106,303 wird demgegenüber ein Verfahren beschrieben, bei dem Keramikpulver kompaktiert oder vorgesintert wird. Aus diesem vorbehandelten Materialblock wird anschließend die Form für das Inlay bzw. die Krone kopiergefräst und zwar in einem vergrößerten Maßstab, so daß die beim nachfolgenden Sintern erfolgende Schrumpfung ausgeglichen wird und die erhaltene Zahnprothese in die präparierte Kavität bzw. auf den präparierten Zahnstumpf paßt. Der Vorteil dieser Methode liegt darin, daß das Material im sogenannten Grünstadium bearbeitet werden kann, was die Bearbeitung vereinfacht, da erst durch das Nachsintern die für die Verwendung als Zahnersatz gewünschte Dichte und Härte des Materials erreicht wird.

Probleme können sich bei dieser in der US 5,106,303 beschriebenen Methode allerdings dadurch ergeben, daß während des Nach-Sinterns, das bei einer Temperatur von ca 1500°C vorgenommen wird, die sehr dünnen Randbereiche gegebenenfalls verformt werden, bzw. bruchanfällig werden.

Der nachstliegende Stand der Technik ist das Dokument EP-A-0 580 565 das alle Merkmale des Oberbegriffs des Anspruchs 1 offenbart.

Die den oben aufgeführten Methoden anhaftenden Probleme zu überwinden, ist die der vorliegenden Erfindung zugrundeliegende Aufgabenstellung, deren Lösung durch die Verwirklichung der kennzeichnenden Merkmale des Anspruchs 1 gegeben ist.

Weitere, vorteilhafte oder alternative Ausbildungen sind in den kennzeichnenden Merkmalen der abhängigen Ansprüche beschrieben.

Dadurch, daß die aus einem vorbehandeltem Rekonstruktions-Material vergrößert erzeugte Form zur Nachbehandlung auf einen um denselben Vergrößerungsfaktor vergrößerten Arbeitsstumpf und/oder in eine Arbeitspackung gesetzt wird, wobei das Material des Arbeitsstumpfes bzw. der Arbeitspackung einen im wesentlichen gleichen Schrumpfungsfaktor aufweist wie das Rekonstruktions-Material, wird diese Form während der Nachbehandlung, bei der eine Material- bzw, Behandlungsabhängige Schrumpfung der Form stattfindet, gesamthaft stabilisiert - und das bis hin zu den kritischen Randbereichen- und vor den oben erwähnten Behandlungs-abhängigen Schäden bewahrt. Gerade auch die Umhüllung der vorgesinterten Form durch eine solche Arbeitspackung erlaubt einen kontrollierten Schrumpfungsprozeß.

Wird eine Oxidkeramik, wie beispielsweise ZrO2 oder Al2O3 als Rekonstruktions-Material und vorzugsweise dann auch als Material für den Arbeitsstumpf bzw. die Arbeitspackung verwendet, so wird die hergestellte zahnprothetische Rekonstruktion eine große Festigkeit und Dichte bei geringer Prorosität aufweisen, wobei Röntgenopazität gegeben ist bei gleichzeitiger Wahlmöglichkeit der für den ästhetischen Gesamteindruck wünschenswerten Farbgebung.

Im Sinne der Erfindung sind als Rekonstruktionsmaterialien bzw. als Materialien für den Arbeitsstumpf bzw. die Arbeitspackung auch andere Hartstoffe, wie SiC, TiN, TiC, TiB2, Si3N4 oder andere biokompatible Carbide oder Nitride der 4., 5. oder 6. Hauptgruppe denkbar, auch Mischungen bzw. Mehrstoffsysteme von Oxidkeramiken, gegebenenfalls mit unterschiedlichen Zusätzen, wie auch in der US 5,106,303 beschrieben, sind möglich; aber auch für die Verarbeitung reiner Feldspatkeramiken oder sogenannter Infiltrationskeramiken, d.h. Oxidkeramiken, in die Glasmasse infiltriert ist, ist das erfindungsgemäße Verfahren geeignet.

Charakteristisch für Oxidkeramiken (und auch andere der oben erwähnten Hartstoffe) ist, daß nach verschiedenen Verfestigungsverfahren - Kompaktieren oder Vorsintern - hergestellte Preßlinge zunächst eine geringe Dichte bzw. Festigkeit besitzen und in diesem sogenannten Grünstadium leicht bearbeitbar sind. Wird somit die Form und gegebenenfalls auch der Arbeitsstumpf bzw. die Arbeitspackung aus einem solchen Preßling herausgefräst, so ist dies arbeitstechnisch von Vorteil.

Auch und gerade für die Herstellung von Abutments ist das erfindungsgemäße Verfahren von Vorteil. Zwischengesinterte Abutments erlauben, jedes noch so komplexe Form während der Integrationsphase der Fixturinstallation (Implantat) zu präparieren und danach fertig zu sintern, sodaß danach - nach Einsetzen der Abutments - eine direkte Eingliederung von Krone oder Brücke ermöglicht wird. Des ist sowohl unter dem Gesichtspunkt der Arbeitsökonomie als auch der Behandlungsdauer und des ästhetischen Anspruchs, der gerade bei grazilen Pfeilerzähnen zum Tragen kommt, von Vorteil.

Wenn das für den Arbeitsstumpf bzw. die Arbeitspackung benötigte Material aus dem Preßling in Pulver- oder Spanform herausgefräst vorliegt, und in die Arbeitsstumpfform gedrückt bzw. um die vorgesinterte Form der Rekonstruktion - insbesondere als vorgegebene Blockform - gepackt wird, wird dieses Material bei der nachfolgenden Nachbehandlung, dem Nachsintern, bei dem die erforderliche Verfestigung stattfindet, nur mehr oder weniger punktweise aneinandergesintert, das nach dem Sintern aus der Inlay- bzw. Kronenform bzw. von der fertig gesinterten Rekonstruktion heraus- bzw. abgelöst bzw. heraus- bzw abgestrahlt werden kann. Damit dies vereinfacht wird, kann die Form vor dem Einbringen des Arbeitsstumpfes bzw. vor dem Einpacken in die Arbeitspackung an ihrer Innenseite bzw. an ihrer Außenseite mit einer dünnen Lackschicht, die beispielsweise ein Zappon- oder ein Celluloselack sein kann, als Trennmittel versehen werden.

Die Erfindung ist im folgenden anhand von Zeichnungen anhand der Herstellung für eine Kronenform rein beipielhaft beschrieben. Es zeigen:
- Fig.1a bis 1e: eine Herstellung einer vergrößerten Kronenform;
- Fig.2: einen vorbehandelten Preßling, aus dem die Kronenform und das Material für einen Arbeitsstumpf bzw. eine Arbeitspackung erzeugt wird und
- Fig.3: eine auf einem Arbeitstumpf sitzende Kronenform, sowie eine nach der Nachbehandlung erhaltene Zahnkrone.

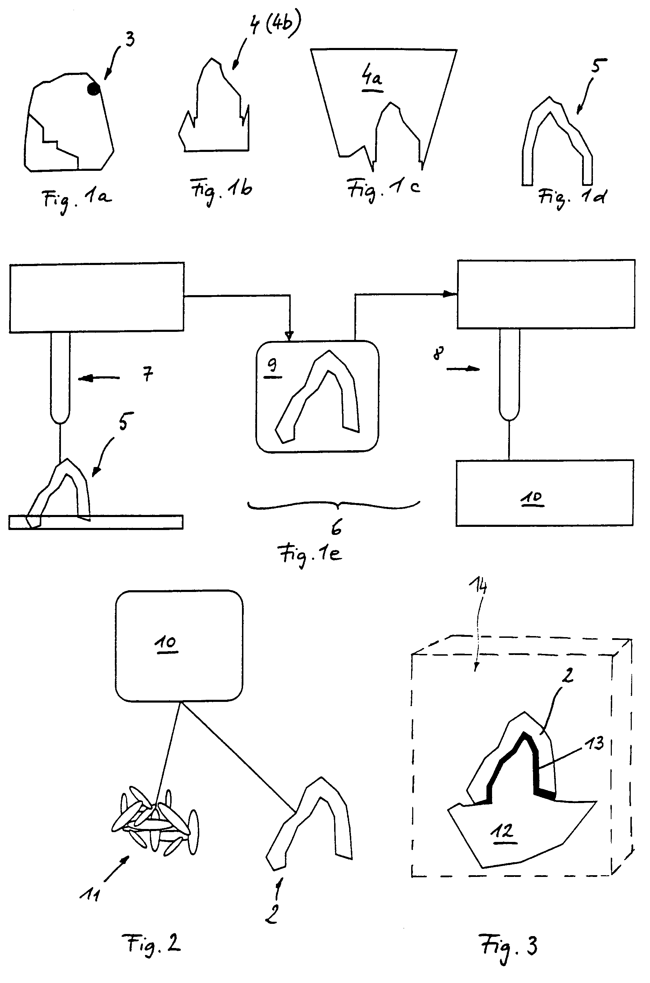

Aus den Figuren 1a bis 1e ist die Herstellung einer vergrößerten Kronenform 2 - beispielhaft für die Herstellung von Inlays, Einzelzähnen, Brücken, von Rekonstruktionen ganz allgemein - zu ersehen. Nach Abschleifen eines kariösen Zahnes 3 stellt sich dieser als Zahnstumpf 4 dar, von dem eine Abformung 4a vorgenommen wird, die mit einem Abgußmaterial ausgegossen wird. Das so erhaltene Modell 4b (entspricht dem abgeschliffenen Zahn 4) der Kavität bzw. der Zahnsituation dient dann als Grundlage für die Formung eines Wachs- oder Kunststoffmodells 5 für die Krone. Dieses Wachsmodell 5 wird dann mit einem Kopierfrässystem 6 abgetastet - beispielsweise über ein Laserdistanzgerät 7 - (auch konventionelle, manuelle oder optische Abtastung über ein Pantographensystem oder ein anderes, entsprechendes System ist möglich), die Daten werden in einem Computer 9 gespeichert, bearbeitet und dem zu verwendenden Material entsprechend vergrößert auf eine Frässpindel 8 übertragen, die die um den gegebenen Vergrößerungsfaktor vergrößerte Abbildung des Wachsmodells 5 aus einem Oxidkeramik-Preßling 10 herausfräst. In gleicher Weise kann, wie schon oben beschrieben, auf den Zwischenschritt der Anfertigung eines Wachs- oder Kunststoffmodells verzichtet, und die Form direkt Computerunterstützt modelliert werden. Nach dem Fräsen der Oberseite der Kronenform 2 (Fig.2) wird in gleicher Weise die Innenform hergestellt.

Wie bereits einleitend dargelegt, kann prinzipiell auch auf eine Abformung und das Erstellen eines Modells verzichtet werden, wenn Inlayaußenform, Kavitätsform oder präparierte Zähne über entsprechende Abtasteinrichtungen direkt im Mund des Patentienten erfaßt werden.

In Figur 2 ist ein Preßling 10 dargestellt, der beispielsweise bei Raumtemperatur bei ca 2000 bar kompaktiert wurde. Aus dem Preßling 10, beispielsweise Zirkonoxidkeramik, werden Späne 11, beispielsweise von einer Länge von 2/10 mm, abtragend herausgefräst. In oben anhand der Fig. 1a - 1e beschriebener Weise wird die Kronenform 2 hergestellt.

Anstelle der Späne 11 kann auch Pulvermaterial mit Korngrößen von beispielsweise zwischen beispielsweise 30 bis 500 µm gebraucht werden.

Kronenform 2 und Späne 11 werden nun vorgesintert, für Zirkonoxidkeramik bei ca 1180°C. Gegebenenfalls können Kronenform 2 und Späne 11 auch aus einem bereits vorgesinterten Preßling 10 herausgearbeitet werden.

Die Bearbeitung der Keramik im sogenannten Grünstadium, d.h. im nicht vorgesinterten Zustand, ebenso wie die Bearbeitung im halbgesinterten (vorgesintertem) Zustand, hat gegenüber den Methoden, die die gewünschten Zahnersatzformen bzw. -rekonstruktionen direkt aus dem fertiggesintertem Arbeitsblock fräsend erstellen, den Vorteil, daß bei der Bearbeitung der Keramik weniger Mikrorisse in die Oberfläche inkorporiert werden und daß der naturgemäß hohe Werkzeugverschleiß, der bei der Bearbeitung der hochfesten Materialien gegeben ist, herabgestzt wird.

Entsprechend Fig.3 werden die Späne 11 danach mit Wasser zu einem dicken Brei gemischt - solcherart einen Arbeitsstumpf 12 ergebend - und in die Kronenform 2 eingefüllt. Das den Spänen 11 bzw. den Pulverkörnern zugesetzte Wasser kann unterschiedliche Beimengungen enthalten, so wird beispielsweise durch Beigabe von ca 1% Essigsäure die Handhabung des Breis erleichtert, es ergibt sich ein thixotropische Verhalten. Durch Beimischung von Alkoholen beispielsweise wird die Standfestigkeit bzw. die Kompaktheit des Gemisches erhöht. Art und Menge der Beimischungen werden also je nach gewünschter bzw. erforderlicher Eigenschaft vorzusehen sein. Eine dünne Lackschicht 13 von 10 bis 50 µ, auf die Innenseite der Kronenform 2 aufgetragen, schließt die Poren der Innenseiten-Oberfläche und dient als Trennmittel zum Arbeitsstumpf 12. Beim nachfolgenden Nachsintern, das für Zirkonoxid bei einer Temperatur von ca 1500°C vorgenommen wird, und bei dem Kronenform 2 und Arbeitsstumpf 12 im gleichen Maße schrumpfen, verbrennt der Lack 13 rückstandslos, wobei sich ein minimaler Spalt zwischen Kronenform 2 und Arbeitsstumpf 12 ergibt, so daß sich letzterer bequem aus der Kronenform 2 entfernen, bzw. - insbesondere auch aufgrund der porösen Konsistenz - ausstrahlen läßt.

Wie in Fig.3 strichliert angedeutet, kann - zur kontrollierten Unterstützung des Sinter-Schrumpfprozesses - die Kronenform 2 auch von außen in einer vorgegebene Maße aufweisenden Arbeitspackung 14 liegen. Die Kronenform 2 wird dann auch von außen mit der trennenden Lackschicht, wie oben beschrieben, beschichtet. Die gegebenenfalls in Blockform gebrachte Arbeitspackung wird dann mit der Kronenform und dem gegebenenfalls darin angeordneten Arbeitsstumpf gemeinsam fertiggesintert. Der Sintervorgang kann gerade anhand einer solchen Arbeitspackung gut kontrolliert werden, da die Änderung der Außenmaße eine direkte Kontrolle des Schrumpfungsprozesses erlauben. Es versteht sich, daß andere Rekonstruktions-Formen, die gegebenenfalls keine oder nur kleinste Hohlräume aufweisen, wie beispielsweise Abutments, gegebenenfalls nur in die Arbeitspackung gepackt fertig gesintert werden können.

Die so erhaltene Zahnkrone 1 bzw. die Gerüststruktur derselben paßt genau auf den vorpräparierten Zahn 4 (Fig.1). Sie kann, falls gewünscht, in bekannter Weise bei ca 700 bis 1200°C mit Feldspatkeramik, Glaskeramiken oder zirkonhaltigen Verblendmaterialien in Pulverform verblendet werden. Dabei muss das Verblendmaterial dem Wärmeausdehnungskoeffizient der Kronen- bzw. Gerüstmaterialien entsprechend ausgewählt werden, wobei der Wärmeausdehnungskoeffizient der Verblendmaterialien in dem entsprechenden Bereich oder geringfügig darunter liegen sollte.

Zeitlich effektive und ästhetisch besonders ansprechende Ergebnisse werden erzielt, wenn das bekannte Heißpreßverfahren verwendet wird, bei dem die Verblendkeramik im heißen, plastisch verformbaren Zustand verwendet wird. Dazu wird die Außenform der Gerüststruktur, auf die gegebenenfalls vorgängig entsprechend der gewünschten Zahnfarbe eine Farbschicht aufgetragen wurde, in Wachs aufgebaut; die Gerüststruktur wird dann in eine feuerfeste Einbettmasse eingebettet, die auf ca 800°c erhitzt wird. Nach Einbringen der Verblendmaterialien wird die Temperatur auf einen Wert erhöht, der 100 bis 300 °C unter der Sintertemperatur der Gerüststruktur liegt, um Verformungen der letzteren zu vermeiden. Die nun plastische Verblendmasse wird auf die Gerüststruktur aufgepreßt. Die Verblendmaterial-Rohlinge sind vorteilhafterweise bereits Schmelz-farben eingefärbt, weißlich-transluzent, entsprechend der Farbe der Schmelzmasse von natürlichen Zähnen. Dadurch, daß die Gerüststruktur vor Aufpressen der Verblendmaterialien mit Wachs verblendet wird, können funktionelle Gegebenheiten des fertigen Zahnes mit einbezogen werden.

Im folgenden sind beispielhaft verschiedene je nach Vorbehandlungsart einzuhaltende Vergrößerungsfaktoren bei der Herstellung der Kronenform 2 (Fig.2) für Zirkon- und Aluminiumoxid angegeben:

| Vorbehandlung: | | Vergrößerungsfaktor (ca) für | |
|---|---|---|---|
| | | Zirkonoxid | Aluminiumoxid |
| nicht vorgesintert,isostat gepreßt | | 30% | 20% |
| vorgesintert bei | 1080°C | 27% | 16% |
| | 1100°C | 26% | 15% |
| | 1150°C | 21% | 11% |
| | 1200°C | 13% | 7% |

Aus der obigen Tabelle, die beispielhaft für mögliche andere Materialien bzw. Legierungen Zirkon- und Aluminiumoxid aufführt, ist zu ersehen, daß gegebenenfalls eine aus Zirkonoxid entsprechend der Fig.1 erzeugte Kronenform auch auf einem Arbeitsstumpf aus Aluminiumoxid-Spänen nachbehandelt werden kann, wenn nur die bei der nachfolgenden Nachbehandlung gegebene Schrumpfung für beide gelich ist. Daß dies von der Art der Vorbehandlung abhängt, ist aus der obigen Tabelle ersichtlich.

Es ist offensichtlich, daß - wie einleitend erwähnt - auch andere Materialien sowohl zur Erzeugung der Kronenform als auch des Arbeitsstumpfes bzw. der Arbeitspackung verwendet werden können. So ist beispielsweise ein Legierung von 95% Zro2 und 5% Ytriumoxid gebräuchlich.

Auch der Arbeitsstumpf bzw. die Arbeitspackung kann einstückig ausgebildet sein, solange er sich nach der Nachbehandlung - gegebenenfalls durch ein dazwischen aufgebrachtes Trennmittel - einwandfrei aus bzw. von der Kronenform entfernen läßt, bzw. auch nach der Hitzebehandlung noch aus- bzw. abgestrahlt werden kann.

## Patentansprüche

1. Verfahren zur Herstellung von zahnprothetischen Rekonstruktionen, wie Zahninlays, Zahnkronen (1), Zahnbrücken oder Abutments, zum Einpassen in eine vorpräparierte Zahnkavität bzw. auf einen vorpräparierten Zahnstumpf (4) oder auf eine entsprechende Fixierung, wobei die dreidimensionale Kontur der Kavität bzw. des Zahnstumpfes (4) oder der Form des Abutments bestimmt und eine um einen vorgegebenen Vergrößerungsfaktor vergrößerte, dreidimensionale Form (2) des Zahninlays bzw. der Zahnkrone oder des Abutments aus vorbehandeltem, d.h. vorgesintertem und/oder kompaktiertem, Zahnersatz-Keramik-Material erzeugt wird, welche Form (2) nachbehandelt, d.h. nachgesintert, wird, wobei eine Schrumpfung auf ein der Kavität bzw. dem Zahnstumpf (4) oder des Abutments entsprechendes Maß erfolgt, und wobei ein um den vorgegebenen Vergrößerungsfaktor vergrößerter und der dreidimensionalen Kontur der Kavität bzw. des Zahnstumpfes (4) oder einer zur Aufnahme eines Teils der Fixierung im Abutment vorgesehenen Öffnung entsprechender Arbeitsstumpf (12) und/oder eine um den vorgegebenen Vergrößerungsfaktor vergrößerte und der dreidimensionalen Kontur der jeweiligen Außenform vergrößerte Arbeitspackung (14) aus einem Material erzeugt wird, dadurch gekennzeichnet, daß das Material in etwa den gleichen Schrumpfungsfaktor wie das Zahnersatz-Material aufweist, und daß
- der Arbeitsstumpf (12) zur Nachbehandlung, d.h. dem Nachsintern der Form (2), in letztere eingebracht und/oder die Arbeitspackung (14) zur Nachbehandlung von außen um die Form (2), diese insbesondere vollständig umhüllend, gepackt wird, wodurch die Form (2) während der Nachbehandlung stabilisiert wird, und
- der Arbeitsstumpf (12) bzw. die Arbeitspackung (14) nach erfolgter Nachbehandlung von der Form (2) getrennt wird.

2. Verfahren nach Anspruch 1, dadurch gekennzeichnet, daß als Zahnersatzmaterial und gegebenenfalls als Material für den Arbeitsstumpf (12) bzw. für die Arbeitspackung (14) ein Hartmaterial, wie eine Oxidkeramik, insbesondere Zirkonoxid- oder Aluminiumoxidkeramik, oder wie Nitride oder Carbide, bzw. Legierungen von Oxidkeramiken, verwendet wird.

3. Verfahren nach Anspruch 2, dadurch gekennzeichnet, daß die Vorbehandlung ein Kompaktieren auf das Grünstadium des Hartstoffs und/oder - beispielsweise bei Verwendung von Oxidkeramik - eine Vorsinterung, insbesondere bei einer Temperatur zwischen 1000 und 1300°C, umfaßt.

4. Verfahren nach Anspruch 2 oder 3, dadurch gekennzeichnet, daß das Material für den Arbeitsstumpf (12) bzw. für die Arbeitspackung (14) aus kompaktierter und/oder - insbesondere bei einer Temperatur zwischen 1000 und 1300°C - vorgesinterter Oxidkeramik besteht.

5. Verfahren nach Anspruch 4, dadurch gekennzeichnet, daß das kompaktierte und/oder vorgesinterte Material für den Arbeitsstumpf (12) bzw. für die Arbeitspackung (14) in Pulver- bzw. Spanform gebracht wird.

6. Verfahren nach einem der vorhergehenden Ansprüche, dadurch gekennzeichnet, daß vor dem Einbringen des Arbeitsstumpfes (12) bzw. vor dem Einbringen der Form (2) in die Arbeitspackung (14) die Form (2) an ihrer Innenseite bzw. an der ihrer Außenseite mit einer dünnen Schicht eines Trennmittels (13) belegt wird, wobei gegebenenfalls die Arbeitspackung (14) - nach Einbringen der Form (2) in dieselbe - in Blockform gebracht wird.

7. Verfahren nach einem der Ansprüche 2 bis 6, dadurch gekennzeichnet, daß die Nachbehandlung eine Nachsinterung bei einer dem Zahnersatzmaterial entsprechenden Sintertemperatur - für Zirkonoxid bei ca 1500°C - umfaßt.

8. Verfahren nach einem der vorhergehenden Ansprüche, dadurch gekennzeichnet, daß nach erfolgter Nachbehandlung der Arbeitsstumpf (12) aus der Form (2) herausgestrahlt bzw. die Form aus der Arbeitspackung (14) herausgelöst wird, wonach gegebenenfalls die Form mit einer Verblendung aus beispielsweise Feldspatkeramik versehen wird, wobei insbesondere das Heißpreßverfahren zum Einsatz kommt.

## Claims

1. Process for manufacturing prosthetic dental reconstructions, such as dental inlays, crowns (1), bridges or abutments, to fit into a prepared dental cavity or onto a prepared tooth stump (4) or onto a corresponding mounting, the three-dimensional contour of the cavity or of the tooth stump (4) or the shape of the abutment being determined and a three-dimensional form (2) of the tooth inlay or of the crown or of the abutment, enlarged by a predetermined enlargement factor, being produced from pretreated, i.e. presintered and/or compacted, ceramic dental replacement material, which form (2) is aftertreated, i.e. resintered, shrinkage to a dimension which corresponds to the cavity or to the tooth stump (4) or to the abutment being effected, and a working stump (12) enlarged by the predetermined enlargement factor and corresponding to the three-dimensional contour of the cavity or of the tooth stump (4) or of an opening intended for holding a part of the mounting in the abutment and/or a working pack (14) enlarged by the predetermined enlargement factor and corresponding to the three-dimensional contour of the respective outer shape being produced from a material, characterized in that the material has about the same shrinkage factor as the dental replacement material and that
- for the aftertreatment, i.e. the resintering of the form (2), the working stump (12) is introduced into the latter and/or, for the aftertreatment, the working pack (14) is packed from outside around the form (2), in particular completely surrounding the latter, whereby the form (2) becomes stabilized during the aftertreatment, and
- the working stump (12) or the working pack (14), when the aftertreatment is complete, is separated form the form (2).

2. Process according to Claim 1, characterized in that a hard material, such as an oxide ceramic, in particular zirconium oxide or aluminium oxide ceramic, or such as a nitride or a carbide, or an alloy of an oxide ceramic, is used as dental replacement material and, if required, as material for the working stump (12) or for the working pack (14).

3. Process according to Claim 2, characterized in that the pretreatment comprises compacting the hard material into the green state and/or - for example when an oxide ceramic is being used - presintering, in particular at a temperature between 1000 and 1300°C.

4. Process according to Claim 2 or 3, characterized in that the material for the working stump (12) or for the working pack (14) comprises compacted and/or - in particular at a temperature between 1000 and 1300°C - presintered oxide ceramic.

5. Process according to Claim 4, characterized in that the compacted and/or presintered material for the working stump (12) or for the working pack (14) is converted into the form of a powder or shavings.

6. Process according to any of the preceding Claims, characterized in that, prior to the introduction of the working stump (12) or prior to the introduction of the form (2) into the working pack (14), the form (2) is coated on its inner surface or on its outer surface with a thin layer of a parting compound (13), if necessary the working pack (14) being brought into the form of a block - after introduction of the form (2) into said pack.

7. Process according to any of Claims 2 to 6, characterized in that the aftertreatment comprises resintering at a sintering temperature appropriate for the dental replacement material - for zirconium oxide, at about 1500°C.

8. Process according to any of the preceding Claims, characterized in that, when aftertreatment is complete, the working stump (12) is blasted out of the form (2) or the form is separated from the working pack (14), after which, if required, the form is provided with a veneer comprising, for example, feldspar ceramic, in particular the hot-press method being used.

## Revendications

1. Procédé de fabrication d'éléments de reconstitution au moyen de prothèses dentaires tels que des incrustations dentaires en profondeur, des couronnes dentaires (1), des ponts dentaires ou des butées ou dents piliers, destinés à être introduits de façon ajustée dans une cavité dentaire préparée préalablement, respectivement sur un chicot (4) préparé préalablement, ou bien sur une fixation correspondante, le contour tridimensionnel de la cavité ou du chicot (4), ou bien la forme de la butée ou dent pilier étant déterminé, et une forme (2) tridimensionnelle, agrandie d'un facteur d'agrandissement prédéterminé, de l'incrustation en profondeur dentaire ou de la couronne dentaire ou de la butée ou dent pilier, étant produite à partir d'un matériau céramique de substitution dentaire prétraité, c'est-à-dire préfritté et/ou compacté, cette forme (2) étant retraitée, c'est-à-dire refrittée, un retrait dimensionnel, à une dimension correspondant à la cavité ou au chicot (4) ou à la butée ou dent pilier correspondant étant effectué et un tronçon de travail (12) correspondant, agrandi du facteur d'agrandissement prédéterminé et correspondant au contour tridimensionnel de la cavité ou du chicot (4) ou d'une ouverture prévue pour recevoir une partie de la fixation dans la butée ou dent pilier, et/ou un enveloppement de travail (14), agrandi du facteur d'agrandissement prédéterminé et agrandi au contour tridimensionnel de la forme extérieure respective, étant fabriqué à partir d'un matériau, caractérisé en ce que le matériau présente à peu près le même facteur de retrait que le matériau de substitution dentaire et que
- le tronçon de travail (12), pour le retraitement, c est-à-dire le refrittage de la forme (2), est introduit dans cette dernière, et/ou l'enveloppement de travail (14), pour le retraitement, est enveloppé depuis l'extérieur autour de la forme (2), en particulier en gainant complètement celle-ci, faisant que la forme (2) est stabilisée pendant l'opération de retraitement, et
- le tronçon de travail (12) et/ou l'enveloppement de travail (14) est séparé de la forme (2) une fois que le retraitement est effectué.

2. Procédé selon la revendication 1, caractérisé en ce qu'on utilise comme matériau de substitution dentaire et, le cas échéant, comme matériau pour le tronçon de travail (12) ou pour l'enveloppement de travail (14) un matériau dur, tel que de la céramique d'oxyde, en particulier de la céramique d'oxyde de zirconium ou d'oxyde d'aluminium, ou tel que des nitrures ou des carbures, respectivement des alliages de céramiques d'oxyde.

3. Procédé selon la revendication 2, caractérisé en ce que le prétraitement comprend un compactage au stade vert du matériau dur et/ou - par exemple en utilisant de la céramique d'oxyde - un préfrittage, en particulier à une température comprise entre 1000 et 1300°C.

4. Procédé selon la revendication 2 ou 3, caractérisé en ce que le matériau du tronçon de travail (12) et/ou pour l'enveloppement de travail (14) est constitué d'une céramique d'oxyde compactée et/ou préfrittée, en particulier à une température comprise entre 1000 et 1300°C.

5. Procédé selon la revendication 4, caractérisé en ce que le matériau compacté et/ou préfritté destiné au tronçon de travail (12) ou à l'enveloppement de travail (14) est amené sous une forme pulvérulente et/ou en copeaux ou particules.

6. Procédé selon l'une des revendications précédentes, caractérisé en ce que, avant l'introduction du tronçon de travail (12), respectivement avant l'introduction de la forme (2) dans l'enveloppement de travail (14), la forme (2) est garnie sur sa face intérieure, respectivement sur sa face extérieure, d'une mince couche d'un agent de séparation (13), le cas échéant l'enveloppement de travail (14) - après introduction de la forme (2) dans celui-ci - étant placé sous une forme en bloc.

7. Procédé selon l'une des revendications 2 à 6, caractérisé en ce que le retraitement comprend un postfrittage à une température de frittage correspondant au matériau de substitution dentaire - température qui est d'environ 1500°C pour de l'oxyde de zirconium.

8. Procédé selon l'une des revendications précédentes, caractérisé en ce que, après avoir effectué le retraitement, le tronçon de travail (12) est sorti de la forme (2) par rayonnement, ou la forme est sortie de l'enveloppement de travail (14) par désolidarisation, suite à quoi, le cas échéant, la forme est dotée d'un écrantage constitué par exemple de céramique de Feldspath, en particulier, le procédé de pressage à chaud étant mis en oeuvre.
